# EUROPÄISCHE PATENTSCHRIFT

(11) **EP 1 410 959 B1**
(45) Veröffentlichungstag und Bekanntmachung des Hinweises auf die Patenterteilung: **22.08.2007**
(21) Anmeldenummer: 03023294.6
(22) Anmeldetag: 15.10.2003
(51) Int. Cl.: B60R 21/20

(54) **Baugruppe mit einem Lenkradgrundkörper und einem Gassackmodul**
Assembly with a base body for a steering wheel and an airbag module
Ensemble avec un corps de base pour un volant et une module coussin gonflable

(30) Priorität: 15.10.2002 DE 20215836 U; 04.12.2002 DE 10256595
(43) Veröffentlichungstag der Anmeldung: 21.04.2004
(73) Patentinhaber: TRW Automotive Safety Systems GmbH, 63743 Aschaffenburg (DE)
(72) Erfinder: Keutz, Markus, 64380 Rossdorf (DE); Scherer, Ralf, 63739 Aschaffenburg (DE)
(74) Vertreter: Kitzhofer, Thomas

(56) Entgegenhaltungen:
- EP-A- 1 167 132
- GB-A- 2 336 135
- US-A- 6 092 832

## Beschreibung

Die Erfindung betrifft eine Baugruppe mit einem Lenkradgrundkörper und einem Gassackmodul nach dem Oberbegriff des Anspruchs 1 und des Anspruchs 12.

Aus Gründen der Zeitersparnis und der Kosteneffektivität werden Gassackmodule in Lenkrädern immer häufiger durch Rastverbindungen befestigt. Diese Rastverbindungen sollten, außer eine sichere Verbindung des Gassackmoduls mit dem Lenkradgrundkörper zu gewährleisten, auch auf einfache Weise lösbar sein, um das Gassackmodul warten oder austauschen zu können. Während das Befestigen eines Bauteils durch eine Rastverbindung meist in einem kurzen Arbeitsgang erfolgen kann, benötigt bei den meisten bekannten Rastverbindungen das Lösen der Rastverbindung erheblich mehr Zeit.

In der gattungsgemäßen EP-A-1 167 132 ist eine Befestigung eines Gassackmoduls an einem Lenkrad beschrieben, bei der Rasthaken des Gassackmoduls in einen gebogenen Federdraht eingreifen. Die so geschaffene Verbindung ist für alle Rasthaken zugleich lösbar, indem der Federdraht an einer Stelle mit einer Kraft beaufschlagt wird und gegenüber den Rasthaken verschoben wird. Die Bewegung führt zu einer Verformung des Federdrahts und zu einer Freigabe der Rasthaken.

Die GB-A-2 336 135 zeigt ein Lenkkrad, das feststehende Haken aufweist, in die an einem Gassackmodul angebrachte, ebenfalls feststehende Haken eingreifen können. Die Haken werden durch eine Bewegung senkecht zur Achse des Lenkrads miteinander in Verbindung gebracht.

Die Erfindung ermöglicht ein gleichzeitiges Losën aller Rastverbindungen auf einfache und sichere Weise.

Dies wird bei einer oben genannten Baugruppe durch die Merkmale des Anspruchs 1 bzw. die des Anspruchs 12 erreicht. Es ist also nicht erforderlich, jede Rastverbindung einzeln zu lösen, um das Gassackmodul aus dem Lenkradgrundkörper zu entnehmen, sondern sämtliche Rastverbindungen können gleichzeitig in einem Arbeitsschritt gelöst werden, indem an einer zentralen Stelle nur eines der Rastelemente erfasst und verschoben wird.

Die ersten Rastelemente sind durch mehrere Rasthaken und das zweite Rastelement ist durch ein langgestrecktes Formteil gebildet, in das die Rasthaken eingreifen können. Das Formteil kann am Gassackmodul oder am Lenkradgrundkörper befestigt sein, wobei die Rasthaken dann am jeweils anderen Bauteil befestigt sind.

Das Formteil ist eine starre Stanzplatte, die in sich unbeweglich ist. Das Formteil wird bevorzugt durch Federkraft in seine Verriegelungsposition gebracht und in dieser gehalten.

Die Erfindung kann selbstverständlich auch zur Befestigung eines Gassackmoduls an anderen fahrzeugfesten Bauteilen als dem Lenkrad eingesetzt werden.

Die Entriegelung erfolgt ohne eine Verformung eines der Rastelemente nur aufgrund einer Bewegung der Rastelemente gegeneinander. Bevorzugt geschieht das Lösen aller Rastverbindungen durch eine rein translatorische Bewegung.

Es kann vorgesehen sein, dass die Gruppe der ersten Rastelemente als Ganzes in Entriegelungsrichtung bewegt wird, d.h. dass keine Relativbewegung der ersten Rastelemente zueinander stattfindet.

Der Lenkradgrundkörper kann z.B. durch ein Lenkradskelett gebildet sein, wobei eine Aufnahme im Nabenbereich vorgesehen ist, in die das Gassackmodul eingesetzt wird.

Das Gassackmodul kann im zusammengebauten Zustand der Baugruppe, d.h. bei eingesetztem und verrastetem Gassackmodul, in einer zur Entriegelungsrichtung senkrechten Richtung gegen den Lenkradgrundkörper bewegbar sein, ohne dass die Rastverbindungen gelöst werden. Dies erlaubt die Betätigung einer Hupe, analog zu einem konventionellen Floating-Horn-Modul.

Am Lenkradgrundkörper lässt sich ein von außen erreichbarer Zugang vorsehen, der eine lokale Kraftübertragung auf das zum Lösen sämtlicher Rastverbindungen vorgesehene Rastelement in Entriegelungsrichtung erlaubt. Auf diese Weise kann beim fertiggestellten Lenkrad, in dem die Baugruppe zusammengesetzt ist, z.B. durch das Einführen eines Spezialwerkzeugs von außen in den Lenkradgrundkörper lokal eine Bewegung des Rastelements in Entriegelungsrichtung hervorgerufen werden, um alle Rastverbindungen zu lösen. Hierzu kann z.B. auf eines der Rastelemente oder auf das Gassackmodul eingewirkt werden.

Bevorzugt ist die Gruppe der ersten Rastelemente und/oder das wenigstens eine zweite Rastelement am Gassackmodul bzw. am Lenkradgrundkörper verschieblich befestigt. Dies hat den Vorteil, dass nicht das Gassackmodul als Ganzes, sondern nur ein Rastelement bzw. die Gruppe von Rastelementen zur Entriegelung bewegt werden muss. Die Gruppe von Rastelementen kann hierzu mit einer oder mehreren Federelementen beaufschlagt sein, so dass das Rastelement bzw. die Gruppe der Rastelemente in eine Verriegelungsposition zurückgestellt werden, sobald die Krafteinwirkung nachlässt. Diese Ausbildung kann auch für die Verriegelung genutzt werden. In diesem Fall wird beim Einsetzen des Gassackmoduls in den Lenkradgrundkörper das verschiebbar gelagerte Rastelement zunächst um einen bestimmten Betrag in Entriegelungsrichtung bewegt, wodurch es möglich ist, das Gassackmodul in seine endgültige Position zu bewegen, und anschließend wird das Rastelement entgegen der Entriegelungsrichtung in ihre verriegelte Position, die einer Grundposition entspricht, zurückbewegt, wodurch das Gassackmodul fest im Lenkradgrundkörper befestigt wird.

Weitere Merkmale und Vorteile der Erfindung ergeben sich aus den Unteransprüchen und aus der nachfolgenden Beschreibung mehrerer Ausführungsbeispiele in Verbindung mit den beigefügten Zeichnungen. In diesen zeigen:
- Figur 1 einen schematischen Schnitt durch ein Lenkrad mit einem Gassackmodul;
- Figur 2 eine schematische Ansicht der Rastelemente einer ersten Baugruppe;
- Figur 3 einen schematischen Schnitt entlang der Linie III-III aus Figur 2 durch eine zweite Baugruppe;
- Figur 4 eine schematische Ansicht einer erfindungsgemäßen Baugruppe gemäß einer ersten Ausführungsform der Erfindung während des Einsetzens des Gassackmoduls;
- Figur 5 eine schematische Ansicht der Baugruppe aus Figur 4 in einem verriegelten Zustand;
- Figur 6 eine schematische Ansicht der Baugruppe aus Figur 4 in einem entriegelten Zustand;
- Figur 7 eine perspektivische Darstellung der Anordnung des zweiten Rastelements der Baugruppe aus Figur 4 am Lenkradgrundkörper;
- Figur 8 das zweite Rastelement aus Figur 7 in Verriegelungsstellung;
- Figur 9 das zweite Rastelement aus Figur 7 in Entriegelungsstellung; und
- Figur 10 eine schematische Ansicht des Gassackmoduls gemäß einer zweiten Ausführung der Erfindung.
zur Veranschaulichung der Erfindung

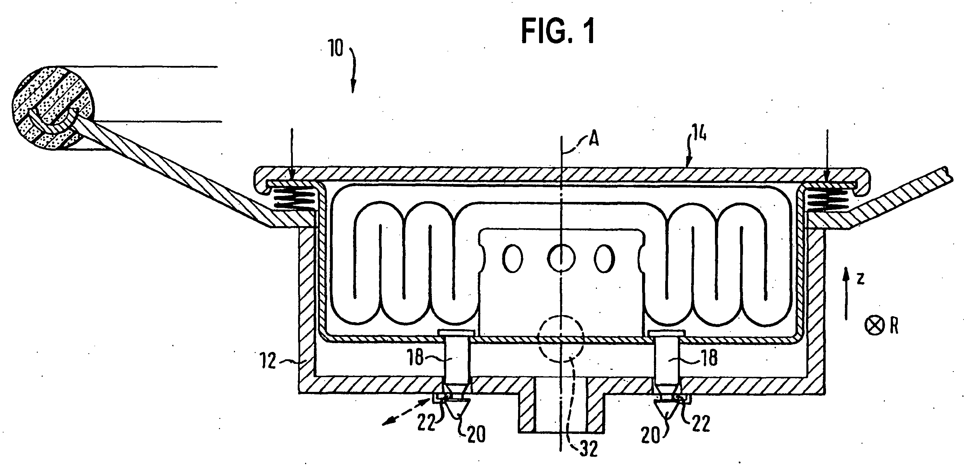

In Figur 1 ist zur Veranschaulichung der Erfindung ein Lenkrad 10 gezeigt, das in bekannter Gestaltung einen Lenkradgrundkörper 12 aufweist, in dessen Nabenbereich eine Ausnehmung ausgebildet ist, in die ein Gassackmodul 14 eingesetzt ist. Der Lenkradgrundkörper 12 kann beispielsweise durch ein Skelett mit oder ohne eine Umhüllung gebildet sein.

Das Gassackmodul 14 ist am Lenkradgrundkörper 12 lösbar und reversibel verrastet. Hierzu ist am Gassackmodul eine Gruppe erster Rastelemente 18 befestigt, die hier als Bolzen mit Rasthaken 20 ausgebildet sind. Beispielhaft sind zwei Bolzen gezeigt, es können aber, den Anforderungen entsprechend, mehr oder weniger Rastelemente 18 vorgesehen sein.

Die Rasthaken 20 der ersten Rastelemente 18 greifen zur Bildung einer Rastverbindung in wenigstens ein zweites Rastelement 22 ein, das am Lenkradgrundkörper 12 befestigt ist. In den hier gezeigten Beispielen ist das zweite Rastelement 22 durch einen starren Draht 24, z.B. einen Federrundstahl mit ca. 2,5 mm Durchmesser, gebildet. Im gezeigten zusammengebauten Zustand der Baugruppe ist der Lenkradgrundkörper 12 fest mit dem Gassackmodul 14 verbunden, da die Rasthaken 20 der ersten Rastelemente 18 mit dem zweiten Rastelement 22 in Eingriff sind. In positiver Z-Richtung kann das Gassackmodul 14 daher nicht bewegt werden. In negativer Z-Richtung ist hingegen eine Verschiebung des Gassackmoduls 14 gegen den Lenkradgrundkörper 12 zur Betätigung einer (nicht gezeigten) Hupe möglich, bei der die Rastverbindung aber nicht gelöst wird.

Das zweite Rastelement 22 ist so ausgebildet, dass es bei einer entsprechenden Anordnung der Rasthaken 20 möglich ist, durch eine einzige, zentrale, translatorische Bewegung von Rastelementen 18, 22 in einer durch die jeweilige Geometrie bestimmten Entriegelungsrichtung R sämtliche Rastelemente 18, 22 außer Eingriff zu bringen. Hier wird dies dadurch erreicht, dass der Draht 24 in eine entsprechende Form gebogen ist und zentral erfasst werden kann.

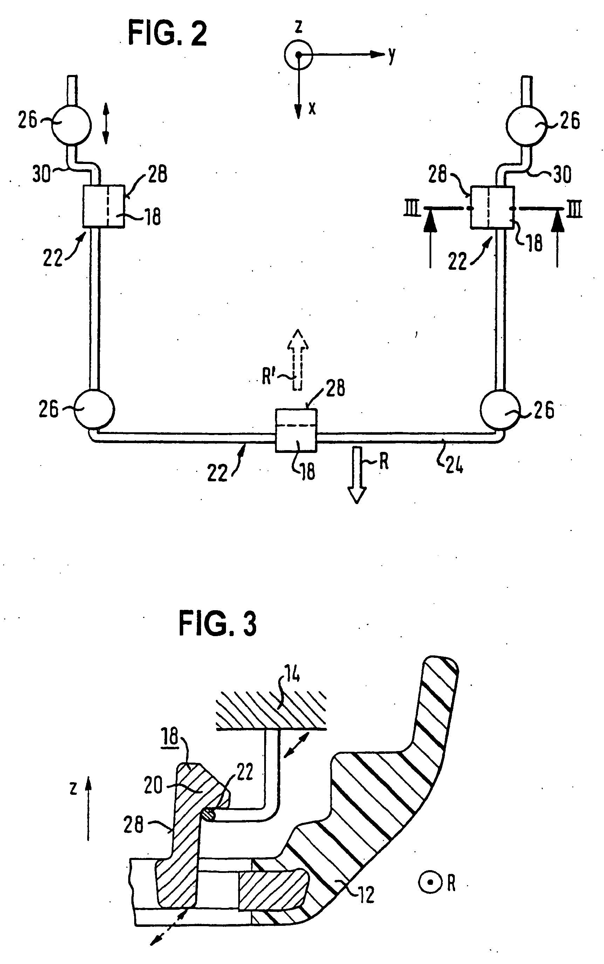

Eine spezielle Möglichkeit zur Ausbildung und Anordnung der Rastelemente 18, 22 ist in Figur 2 näher dargestellt. Die ersten Rastelemente 18 sind hier als einseitig geformte Rasthaken 20 ausgebildet (siehe Figur 3) und entweder mit dem Gassackmodul 14 oder dem Lenkradgrundkörper 12 fest verbunden. In die Rasthaken 20 greift bei geschlossener Rastverbindung das zweite Rastelement 22 ein. Das zweite Rastelement 22 ist hier verschiebbar in Führungen 26 gehaltert (angedeutet durch Pfeile in den Figuren 1 und 3), die wiederum entweder mit dem Lenkradgrundkörper 12 oder dem Gassackmodul 14 fest verbunden sind.

Im hier gezeigten Beispiel ist der Draht 24 U-förmig gebogen. Es sind drei erste Rastelemente 18 vorgesehen. Die geschlossenen Seiten 28 der Rasthaken 20 sind jeweils zum Inneren des "U" gerichtet. Je ein erstes Rastelement 18 ist an jedem Schenkel und an der geschlossenen Seite des "U" angeordnet. An den Schenkeln des "U", oberhalb der ersten Rastelemente 18 weist der Draht 24 jeweils einen nach außen gerichteten Knick 30 auf.

Das zweite Rastelement 22 greift in die Rasthaken 20 ein, so dass die Rastverbindungen geschlossen sind. Durch die mehreren Rastelemente 18, 22 ist eine stabile, spielarme Befestigung des Gassackmoduls 14 am Lenkradgrundkörper 12 gewährleistet. Eine Bewegung des Gassackmoduls 14 ist in diesem Zustand nur in negativer Z-Richtung, nicht aber in positiver Z-Richtung möglich.

Durch eine Translationsbewegung des Rastelements 22 in Entriegelungsrichtung R, die senkrecht zur Z-Richtung liegt, lassen sich die Rastelemente 18, 22 außer Eingriff bringen. Das Rastelement 22 bewegt sich dabei in der mit x-y bezeichneten Ebene. Der das zweite Rastelement 22 bildende Draht 24 wird während der Entriegelungsbewegung in sich nicht verformt, sondern nur als Ganzes translatorisch bewegt. Auch die ersten Rastelemente 18 sind hier starr ausgebildet, so dass sie sich während der Entriegelungsbewegung nicht verformen.

Es ist auch möglich, den Draht 24 starr zu befestigen und die Gruppe der ersten Rastelemente 18 (eventuell über ein zwischengeschaltetes Trägerelement) verschieblich zu haltern. In diesem Fall ist die Entriegelungsrichtung natürlich die negative Richtung R, angedeutet mit R'.

In jedem Fall lässt sich durch das Aufbringen einer Kraft an einem einzigen Punkt alle Rastelemente außer Eingriff bringen.

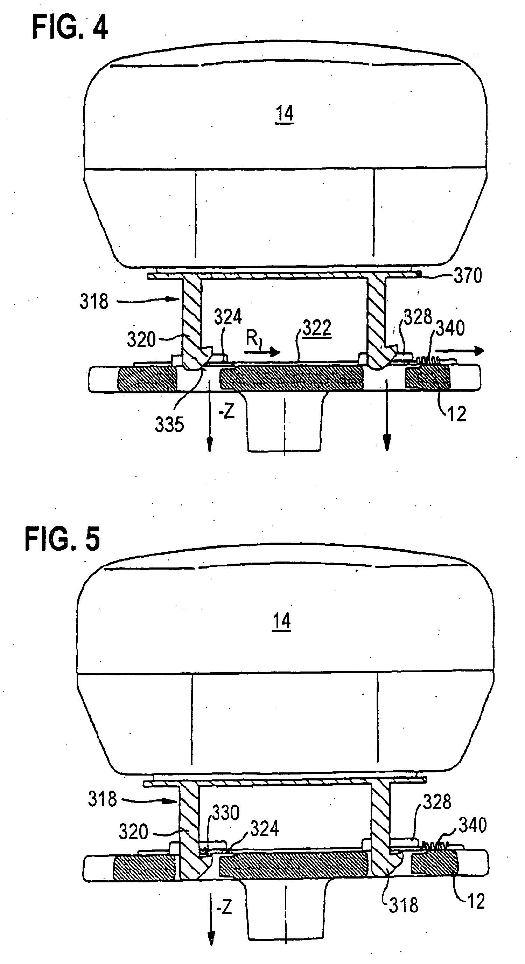

Die jeweils verschieblich gelagerte Gruppe von Rastelementen kann durch ein Federelement in die Grundstellung, in der die Rastverbindungen geschlossen sind, beaufschlagt sein, um ein unbeabsichtigtes Entriegeln zu verhindern (siehe Figuren 4 bis 9).

Figur 3 zeigt eine Variante, in der die Gruppe erster Rastelemente 18 am Lenkradgrundkörper 12 und das zweite Rastelement 22 am Gassackmodul 14 befestigt sind/ist.

Es ist aber unerheblich, ob die Gruppe der ersten Rastelemente 18 am Gassackmodul 14 oder am Lenkradgrundkörper 12 befestigt ist, da lediglich das Zusammenspiel der Rastelemente 18, 22 wesentlich ist. Das in Figur 2 gezeigte Beispiel stellt nur eine von vielen möglichen Ausgestaltungen der Rastelemente 18, 22 dar.

Bevorzugt weisen der Lenkradgrundkörper 12 sowie eine etwaig darüber angeordnete Verkleidung einen zentralen, von außen erreichbaren Zugang 32 auf, durch die mit einem Werkzeug (vorteilhaft nur mit einem Spezialwerkzeug) die Bewegung wenigstens eines Rastelements 18, 22 in Entriegelungsrichtung R, R' zur zentralen Entriegelung bewirkt werden kann.

Die Rastelemente 18, 22 können auch als elektrische Kontakte der Hupe eingesetzt werden. In diesem Fall müssen sie gegenüber dem Gassackmodul 14 und dem Lenkradgrundkörper 12 elektrisch isoliert sein, z.B. indem sie aus einem isolierenden Material bestehen oder mit einem solchen beschichtet sind.

In einer ersten in den Figuren 4 bis 10 gezeigten Ausführungsform der Erfindung ist das zweite Rastelement 322 als starre, in sich nicht bewegliche rahmenförmige Platte 324, z.B. als Stanzplatte, ausgebildet. Die Platte 324 weist eine Form auf, die es erlaubt, sie durch eine rein translatorische Bewegung gleichzeitig mit allen vorhandenen ersten Rastelementen 318 außer Eingriff zu bringen. Die Platte 322 ist so starr ausgebildet, dass sie während des Entriegelungsvorgangs weder plastisch noch elastisch deformiert wird.

Die Platte 324 ist in am Lenkradgrundkörper 12 angeordneten Führungen 326 in Entriegelungsrichtung R gegen die Rückstellkraft eines Federelements 340 verschieblich gehalten. In der gezeigten Ausführungsform wird das Federelement 340 durch eine in einer Ausnehmung des Lenkradgrundkörpers 12 fixierten Spiralfeder gebildet. In Entriegelungsrichtung R verlaufende Arme 328 der starren Führungen 326 verhindern eine Bewegung der Platte 324 entgegengesetzt einer Einschubrichtung des Moduls (hier die Richtung -Z). In -Z-Richtung wird die Platte 324 vom Lenkradgrundkörper 12 unterstützt. Die Führungen 326 sind einseitig offen, so dass die Platte 324 beim Zusammenbau des Lenkrads einfach in die Führungen 326 eingelegt werden kann.

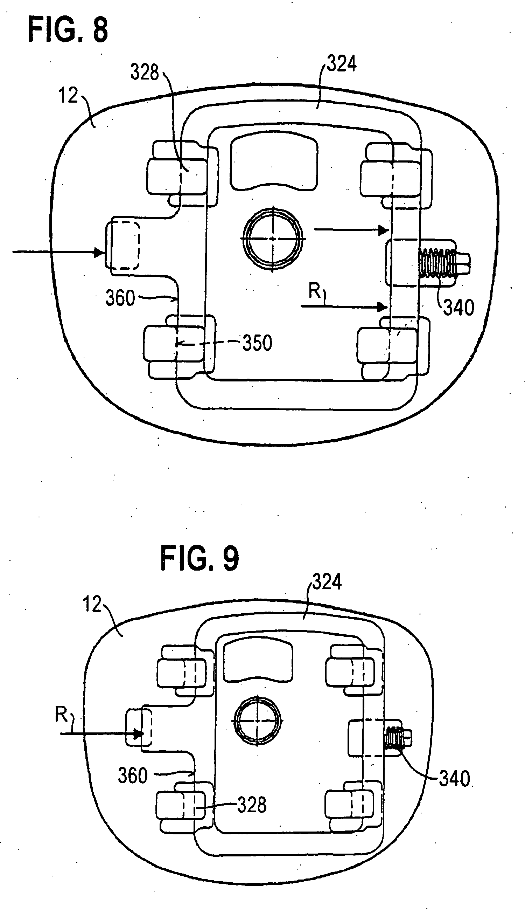

Die geschlossenen Seiten der Führungen 326 bilden einen Anschlag 350 für die Platte 324, die eine Bewegung der Platte entgegen der Entriegelungsrichtung R aufgrund der vom Federelement 340 ausgeübten Kraft begrenzt. In Verriegelungsstellung (Figuren 5 und 8) liegt der in den Figuren linke Rand 360 der Platte 324 an den Anschlägen 350 an.

Die ersten Rastelemente 318 sind durch am Gassackmodul 14 befestigte Rasthaken 320 gebildet, die an ihrem freien Ende je eine Rastfläche 330 und eine Gleitfläche 335 aufweisen.

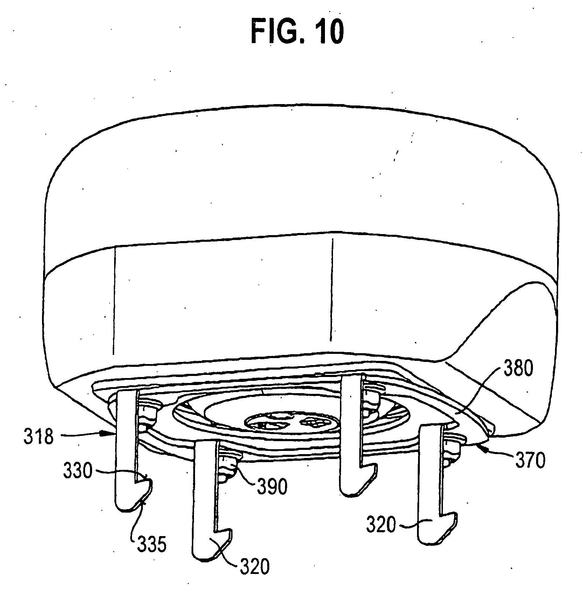

Die Rasthaken 320 sind Teil eines Trägerblechs 370, das außerdem einen einstückig mit den Rasthaken 320 verbundenen, im wesentlichen flachen, rahmenförmigen Basisabschnitt 380 aufweist, über den das Trägerblech 370 z.B. über ein Schraubverbindung 390 fest am Gassackmodul 14 befestigt ist (siehe Figur 10). Das Trägerblech 370 ist als Blechstanzteil ausgebildet. Die ersten Rastelemente 318 werden nach dem Ausstanzen des Trägerblechs umgebogen, so dass sie im rechten Winkel vom Basisabschnitt 380 abstehen. Die ersten Rastelemente 318 sind so ausgebildet, dass alle Rasthaken 320 in die gleiche Richtung zeigen (siehe Figur 10). Der Basisabschnitt 380 kann eine Verstärkungsfunktion für den Boden des Moduls 14 haben, z.B. in dem Fall, wenn das Modulgehäuse bzw. ein den Boden des Moduls bildender Gasgeneratorträger aus Kunststoff besteht. Das Trägerblech 370 kann zur Erhöhung der Steifigkeit mit Sicken, Abkantungen, Bördelungen oder dergleichen versehen sein.

Die Platte 324 ist als vom Gassackmodul 14 und vom Lenkradkörper 12 separates Bauteil ausgebildet. Im hier gezeigten Beispiel ist die Platte 324 mit dem Lenkradgrundkörper nur durch die Aufnahme in den Führungen 326 und das Federelement 340 und mit dem Gassackmodul 14 nur im verriegelten Zustand über die Anlage an den Rasthaken 320 verbunden.

Um das Gassackmodul 14 am Lenkradgrundkörper 12 zu befestigen, wird es in negativer Z-Richtung (-Z) in den Lenkradgrundkörper 12 eingesetzt. Dabei kommen die Gleitflächen 335 der Rasthaken 320 in Kontakt mit der durch das Federelement 340 in Verriegelungsstellung gehaltenen Platte 324 und bewegen diese bei fortschreitendem Einschieben in Entriegelungsrichtung R (siehe Figur 4). Die Platte 324 wird so weit bewegt, dass die Rasthaken 320 sich in -Z-Richtung an der Platte 324 vorbei bewegen können. Die Platte 324 bleibt dabei jedoch in Eingriff mit den Führungen 326.

Nachdem die Rasthaken 320 die Platte 324 in -Z-Richtung passiert haben, bewegt sich die Platte 324 aufgrund der Federwirkung zurück in ihre Verriegelungsstellung (siehe Figur 5). Die Rastflächen 330 der Rasthaken 320 kommen nun bei Zug in positiver Z-Richtung in Anlage an die Platte 324, so dass das Gassackmodul 14 zurückgehalten wird. Alle ersten Rastelemente 318 sind im verriegelten Zustand direkt mit dem zweiten Rastelement 322 in Eingriff. Eine weitere Bewegung des Gassackmoduls 14 in -Z-Richtung um ein bestimmtes Maß, z.B. zur Betätigung einer Hupe, ist möglich.

Zur Entriegelung der Rastverbindungen ist an der hier gezeigten Platte 324 an einer Seite ein Fortsatz 400 vorgesehen, der durch eine Ausnehmung 332 im Lenkradgrundkörper 12 von der Außenseite des Lenkrads her z.B. für ein Spezialwerkzeug zugänglich ist. Das Federelement 340 greift im hier gezeigten Beispiel an der dem Fortsatz 400 entgegengesetzten Seite an der Platte 324 an. Fortsatz und Federelement können aber auch an anderer Stelle angeordnet oder anders ausgebildet sein.

Um das Gassackmodul 14 vom Lenkrad zu lösen, wird die Platte 324 mittels des Werkzeugs gegen die Kraft des Federelements 340 in ihre Entriegelungsstellung verschoben (siehe Figur 9), in der die Rastflächen 330 der Rasthaken 320 bei einer Bewegung in positiver Z-Richtung nicht mit der Platte 324 in Kontakt kommen. In dieser Stellung der Platte 324 kann das Gassackmodul 14 einfach durch eine Bewegung in Z-Richtung aus dem Lenkradgrundkörper 12 entnommen werden.

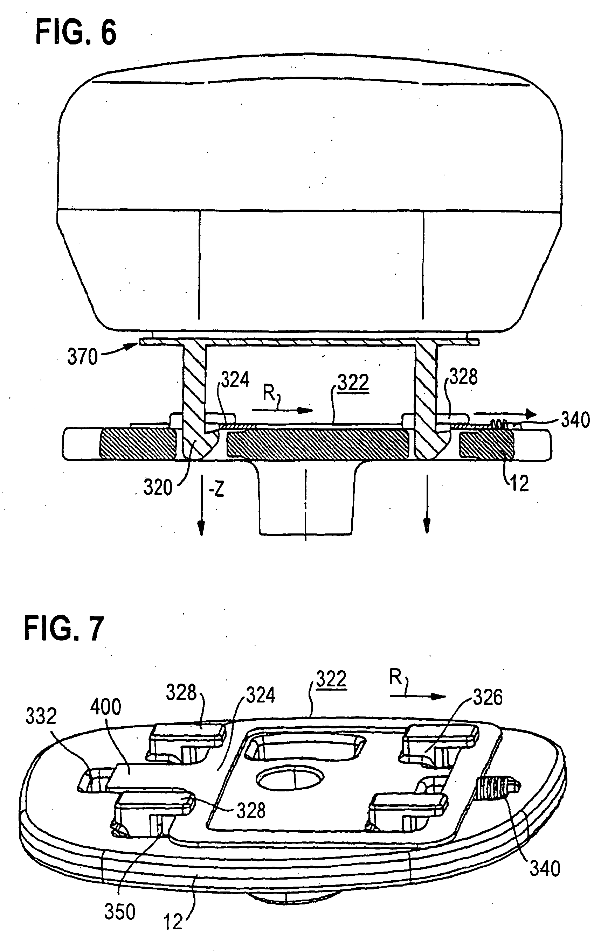

Die Rasthaken 320 aller ersten Rastelemente 318 werden durch die Verschiebung der Platte 324 in Entriegelungsrichtung R gleichzeitig freigegeben. Da alle Rasthaken 320 in die gleiche Richtung weisen, nämlich mit der offenen Seite des Hakens in Entriegelungsrichtung R (siehe z.B. Figur 6), lassen sich sämtliche Rastverbindungen durch eine einzige, rein translatorische Bewegung des zweiten Rastelements 322 gleichzeitig lösen. Ein Verschiebeweg, der der Ausdehnung der Rastflächen 330 in Entriegelungsrichtung R entspricht, ist dafür ausreichend, so dass nur ein kurzer Verschiebeweg für das zweite Rastelement 322 vorgesehen sein muss.

Die Platte 324 wird weder beim Herstellen der Verriegelung noch beim Entriegeln elastisch oder plastisch verformt.

Für das zweite Rastelement kann auch eine der U-Form des Drahts 24 entsprechende oder eine beliebige andere geeignete Form gewählt sein. Alle anderen Merkmale können wie oben beschrieben verwirklicht sein.

Die Platte 324 kann statt am Lenkradgrundkörper 12 auch am Gassackmodul 14 befestigt sein. Die Rasthaken 320 wären dann entsprechend am Lenkradgrundkörper 12 angeordnet.

Das Federelement 340 kann auch durch eine oder mehrere Blattfedern oder einen elastischen Puffer, z.B. aus Gummi, oder auch durch einen Abschnitt einer Umschäumung des Lenkrads gebildet sein. Ebenso ist es möglich, das Federelement 340 zur Entriegelung nicht, wie gezeigt durch Druck, sondern durch Zug zu belasten. In diesem Fall lässt sich das Federelement 340 auch durch ein elastisches Band verwirklichen.

## Patentansprüche

1. Baugruppe mit einem Lenkradgrundkörper (12) und einem Gassackmodul (14), wobei das Gassackmodul (14) lösbar am Lenkradgrundkörper (12) verrastbar ist, indem eine Gruppe erster Rastelemente (18; 318) sowie wenigstens ein mit den ersten Rastelementen (18; 318) in reversiblen Verriegelungseingriff bringbares zweites Rastelement (22; 322) vorgesehen sind, wobei die ersten Rastelemente (18) durch mehrere Rasthaken (20) und das zweite Rastelement (22) durch wenigstens ein langgestrecktes Formteil gebildet sind, in das die Rasthaken (20) eingreifen,
wobei im zusammengebauten Zustand der Baugruppe (12, 14) die ersten und das wenigstens eine zweite Rastelement (18, 22; 318, 322) in einer Entriegelungsrichtung (R; R') gegeneinander bewegbar angeordnet sind und die Rastelemente (18, 22; 318, 322) so ausgelegt sind, dass durch eine Bewegung des zweiten Rastelements (22; 322) relativ zu den ersten Rastelementen (18; 318) in der Entriegelungsrichtung (R; R') sämtliche Rastverbindungen (18, 22; 318, 322) zerstörungsfrei gleichzeitig gelöst werden,
**dadurch gekennzeichnet, dass** das Formteil eine starre Platte ist.

2. Baugruppe nach Anspruch 1, **dadurch gekennzeichnet, dass** die Platte (322) ein Blechstanzteil ist.

3. Baugruppe nach einem der vorhergehenden Ansprüche, **dadurch gekennzeichnet, dass** die Platte (322) rahmenförmig ist.

4. Baugruppe nach einem der vorhergehenden Ansprüche, **dadurch gekennzeichnet, dass** das Gassackmodul (14) im zusammengebauten Zustand der Baugruppe (12, 14) in einer zur Entriegelungsrichtung (R; R') senkrechten Richtung (-z) gegen den Lenkradgrundkörper (12) bewegbar ist, ohne dass die Rastverbindungen gelöst werden.

5. Baugruppe nach einem der vorhergehenden Ansprüche, **dadurch gekennzeichnet, dass** am Lenkradgrundkörper (12) ein von außen erreichbarer Zugang (32:332) vorgesehen ist, der eine Kraftübertragung auf das zum Lösen sämtlicher Rastverbindungen vorgesehene Rastelement (22; 322) in Entriegelungsrichtung (R; R') erlaubt.

6. Baugruppe nach einem der vorhergehenden Ansprüche, **dadurch gekennzeichnet, dass** die Gruppe der ersten Rastelemente (18; 318) und/oder das wenigstens eine zweite Rastelement (22; 322) am Gassackmodul (14) bzw. am Lenkradgrundkörper (12) verschieblich befestigt sind/ist.

7. Baugruppe nach Anspruch 6, **dadurch gekennzeichnet, dass** das verschieblich befestigte Rastelement (322) durch ein Federelement (340) beaufschlagt ist, das bestrebt ist, das Rastelement (322) in einer Verriegelungsstellung zu halten.

8. Baugruppe nach Anspruch 6 oder 7, **dadurch gekennzeichnet, dass** für das verschieblich befestigte Rastelement (322) wenigstens ein Anschlag (350) vorgesehen ist, an dem das Rastelement (322) in seiner Verriegelungsstellung anliegt.

9. Baugruppe nach einem der vorhergehenden Ansprüche, **dadurch gekennzeichnet, dass** die ersten Rastelemente (18; 318) jeweils einen Rasthaken (20; 320) aufweisen und alle Rasthaken (20; 320) in die gleiche Richtung ausgerichtet sind.

10. Baugruppe nach einem der vorhergehenden Ansprüche, **dadurch gekennzeichnet, dass** die Bewegung zum Lösen der Rastverbindungen eine rein translatorische Bewegung ist.

11. Baugruppe nach einem der vorhergehenden Ansprüche, **dadurch gekennzeichnet, daß** das zweite Rastelement (22; 322) so starr ausgelegt ist, dass es während der Entriegelung nicht verformt wird.

12. Baugruppe mit einem Lenkradgrundkörper (12) und einem Gassackmodul (14), wobei das Gassackmodul (14) lösbar am Lenkradgrundkörper (12) verrastbar ist, indem eine Gruppe erster Rastelemente (18; 318) sowie wenigstens ein mit den ersten Rastelementen (18; 318) in reversiblen Verriegelungseingriff bringbares zweites Rastelement (22; 322) vorgesehen sind,
im zusammengebauten Zustand der Baugruppe (12, 14) die ersten und das wenigstens eine zweite Rastelement (18, 22; 318, 322) in einer Entriegelungsrichtung (R; R') gegeneinander bewegbar angeordnet sind und die Rastelemente (18, 22; 318, 322) so ausgelegt sind, dass durch eine Bewegung des zweiten Rastelements (22; 322) relativ zu den ersten Rastelementen (18; 318) in der Entriegelungsrichtung (R; R') sämtliche Rastverbindungen (18, 22; 318, 322) zerstörungsfrei gleichzeitig gelöst werden,
**dadurch gekennzeichnet, daß** das zweite Rastelement (22; 322) so starr ausgelegt ist, daß es während der Entriegelung nicht verformt wird, die Gruppe der ersten Rastelemente (18; 318) und/oder das wenigstens eine zweite Rastelement (22; 322) am Gassackmodul (14) bzw. am Lenkradgrundkörper (12) verschieblich befestigt sind/ist und das verschieblich befestigte Rastelement (322) bzw. Gruppe von Rastelementen durch ein separates Federelement (340) beaufschlagt ist, das bestrebt ist, das Rastelement (322) bzw. die Gruppe von Rastelementen in einer Verriegelungsstellung zu halten.

## Claims

1. An assembly comprising a steering wheel base body (12) and a gas bag module (14), the gas bag module (14) being adapted to be releasably latched to the steering wheel base body (12) by a group of first detent elements (18; 318) and at least one second detent element (22; 322) being provided and the at least one second detent element (22; 322) being adapted to be brought into reversible locking engagement with the first detent elements (18; 318), the first detent elements (18) being formed by several detent hooks (20) and the second detent element (22) being formed by at least one elongated shaped part into which the detent hooks (20) engage,
the first detent elements and the at least one second detent element (18, 22; 318, 322), in the assembled condition of the assembly (12, 14), being arranged so as to be movable with respect to each other in an unlocking direction (R; R'), and the detent elements (18, 22; 318, 322) being designed such that by a movement of the second detent element (22; 322) relative to the first detent elements (18; 318) in the unlocking direction (R; R') all the detent connections (18, 22; 318, 322) are released simultaneously in a non-destructive manner,
**characterized in that** the shaped part is a rigid plate.

2. The assembly according to claim 1, **characterized in that** the plate (322) is a stamped sheet metal part.

3. The assembly according to either of the preceding claims, **characterized in that** the plate (322) is frame-shaped.

4. The assembly according to any of the preceding claims, **characterized in that** in the assembled condition of the assembly (12, 14), the gas bag module (14) is movable against the steering wheel base body (12) in a direction (-z) perpendicular to the unlocking direction (R; R'), without the detent connections being released.

5. The assembly according to any of the preceding claims, **characterized in that** provided on the steering wheel base body (12) is an access (32; 332) which is accessible from outside and permits a transmission of force onto the detent element (22; 322), provided for releasing all the detent connections, in the unlocking direction (R; R').

6. The assembly according to any of the preceding claims, **characterized in that** the group of the first detent elements (18; 318) and/or the at least one second detent element (22; 322) are/is displaceably fastened to the gas bag module (14) or to the steering wheel base body (12), respectively.

7. The assembly according to claim 6, **characterized in that** the displaceably fastened detent element (322) is acted upon by a spring element (340) which endeavours to hold the detent element (322) in a locking position.

8. The assembly according to claim 6 or 7, **characterized in that** provided for the displaceably fastened detent element (322) is at least one stop (350) against which the detent element (322) lies in its locking position.

9. The assembly according to any of the preceding claims, **characterized in that** the first detent elements (18; 318) each have a detent hook (20; 320) and all the detent hooks (20; 320) are oriented in the same direction.

10. The assembly according to any of the preceding claims, **characterized in that** the movement for releasing the detent connections is a purely translational movement.

11. The assembly according to any of the preceding claims, **characterized in that** the second detent element (22; 322) is designed to be so rigid that it is not deformed during the unlocking process.

12. An assembly comprising a steering wheel base body (12) and a gas bag module (14), the gas bag module (14) being adapted to be releasably latched to the steering wheel base body (12) by a group of first detent elements (18; 318) and at least one second detent element (22; 322) being provided and the at least one second detent element (22; 322) being adapted to be brought into reversible locking engagement with the first detent elements (18; 318),
the first detent elements and the at least one second detent element (18, 22; 318, 322), in the assembled condition of the assembly (12, 14), being arranged so as to be movable with respect to each other in an unlocking direction (R; R'), and the detent elements (18, 22; 318, 322) being designed such that by a movement of the second detent element (22; 322) relative to the first detent elements (18; 318) in the unlocking direction (R; R') all the detent connections (18, 22; 318, 322) are released simultaneously in a non-destructive manner,
**characterized in that** the second detent element (22; 322) is designed to be so rigid that it is not deformed during the unlocking process, the group of the first detent elements (18; 318) and/or the at least one second detent element (22; 322) are/is displaceably fastened to the gas bag module (14) or to the steering wheel base body (12), respectively, and the displaceably fastened detent element (322) or group of detent elements is acted upon by a separate spring element (340) which endeavours to hold the detent element (322) or the group of detent elements in a locking position.

## Revendications

1. Ensemble comportant un corps de base de volant de direction (12) et un module de coussin à gaz (14), le module de coussin à gaz (14) pouvant être enclenché de manière détachable sur le corps de base de volant de direction (12) en prévoyant un groupe de premiers éléments d'enclenchement (18 ; 318) ainsi qu'au moins un deuxième élément d'enclenchement (22 ; 322) qui peut être amené en engagement de verrouillage réversible avec les premiers éléments d'enclenchement (18 ; 318), les premiers éléments d'enclenchement (18) étant formés par plusieurs crochets d'enclenchement (20) et le deuxième élément d'enclenchement (22) étant formé par au moins une pièce conformée allongée dans laquelle s'engagent les crochets (20),
à l'état d'assemblage de l'ensemble (12, 14), les premiers éléments d'enclenchement et ledit au moins un deuxième élément d'enclenchement (18, 22 ; 318, 322) étant agencés de manière mobile les uns par rapport aux autres dans une direction de déverrouillage (R ; R'), et les éléments d'enclenchement (18, 22 ; 318, 322) étant réalisés de telle sorte que par un mouvement du deuxième élément d'enclenchement (22 ; 322) par rapport aux premiers éléments d'enclenchement (18 ; 318) dans la direction de déverrouillage (R ; R') toutes les liaisons par enclenchement (18, 22 ; 318, 322) sont simultanément détachées sans destruction,
**caractérisé en ce que** la pièce conformée est une plaque rigide.

2. Ensemble selon la revendication 1, **caractérisé en ce que** la plaque (322) est une pièce de tôle estampée.

3. Ensemble selon l'une des revendications précédentes, **caractérisé en ce que** la plaque (322) a la forme d'un cadre.

4. Ensemble selon l'une des revendications précédentes, **caractérisé en ce que** le module de coussin à gaz (14), à l'état d'assemblage de l'ensemble (12, 14), est mobile contre le corps de base de volant de direction (12) dans une direction (-z) perpendiculaire à la direction de déverrouillage (R ; R'), sans que les liaisons par enclenchement soient détachées.

5. Ensemble selon l'une des revendications précédentes, **caractérisé en ce qu'**il est prévu sur le corps de base de volant de direction (12) un accès (32 ; 332) accessible depuis l'extérieur, qui permet en direction de déverrouillage (R ; R'), une transmission de force sur l'élément d'enclenchement (22 ; 322) prévu pour détacher toutes les liaisons par enclenchement.

6. Ensemble selon l'une des revendications précédentes, **caractérisé en ce que** le groupe des premiers éléments d'enclenchement (18 ; 318) et/ou ledit au moins deuxième élément d'enclenchement (22 ; 322) est fixé de manière déplaçable sur le module de coussin à gaz (14) et sur le corps de base de volant de direction (12), respectivement.

7. Ensemble selon la revendication 6, **caractérisé en ce que** l'élément d'enclenchement (322) fixé de manière déplaçable est sollicité par un élément ressort (340) qui tend à maintenir l'élément d'enclenchement (322) dans une position de verrouillage.

8. Ensemble selon la revendication 6 ou 7, **caractérisé en ce que** pour l'élément d'enclenchement (322) fixé de manière déplaçable est prévue au moins une butée (350) sur laquelle l'élément d'enclenchement (322) est en appui dans sa position de verrouillage.

9. Ensemble selon l'une des revendications précédentes, **caractérisé en ce que** les premiers éléments d'enclenchement (18 ; 318) présentent chacun un crochet d'enclenchement (20 ; 320), et tous les crochets d'enclenchement (20 ; 320) sont orientés dans la même direction.

10. Ensemble selon l'une des revendications précédentes, **caractérisé en ce que** le mouvement pour détacher les liaisons par enclenchement est un mouvement de pure translation.

11. Ensemble selon l'une des revendications précédentes, **caractérisé en ce que** le deuxième élément d'enclenchement (22 ; 322) est réalisé si rigide qu'il n'est pas déformé pendant le déverrouillage.

12. Ensemble comportant un corps de base de volant de direction (12) et un module de coussin à gaz (14), le module de coussin à gaz (14) pouvant être enclenché de manière détachable sur le corps de base de volant de direction (12) en prévoyant un groupe de premiers éléments d'enclenchement (18 ; 318) ainsi qu'au moins un deuxième élément d'enclenchement (22 ; 322) qui peut être amené en engagement de verrouillage réversible avec les premiers éléments d'enclenchement (18 ; 318),
et à l'état d'assemblage de l'ensemble (12, 14), les premiers éléments d'enclenchement et ledit au moins un deuxième élément d'enclenchement (18, 22 ; 318, 322) étant agencés de manière mobile les uns par rapport aux autres dans une direction de déverrouillage (R ; R'), et les éléments d'enclenchement (18, 22 ; 318, 322) étant réalisés de telle sorte que par un mouvement du deuxième élément d'enclenchement (22 ; 322) par rapport aux premiers éléments d'enclenchement (18 ; 318) dans la direction de déverrouillage (R ; R'), toutes les liaisons par enclenchement (18, 22 ; 318, 322) sont simultanément détachées sans destruction,
**caractérisé en ce que** le deuxième élément d'enclenchement (22 ; 322) est réalisé si rigide qu'il n'est pas déformé pendant le déverrouillage, le groupe des premiers éléments d'enclenchement (18 ; 318) et/ou ledit au moins deuxième élément d'enclenchement (22 ; 322) est fixé de manière déplaçable sur le module de coussin à gaz (14) et sur le corps de base de volant de direction (12), respectivement, et l'élément d'enclenchement (322) ou le groupe d'éléments d'enclenchement, respectivement, fixé de manière déplaçable, est sollicité par un élément ressort (340) séparé qui tend à maintenir l'élément d'enclenchement (322) ou le groupe d'éléments d'enclenchement dans une position de verrouillage.
